# EUROPEAN PATENT SPECIFICATION

(11) **EP 0 992 188 B1**
(45) Date of publication and mention of the grant of the patent: **27.02.2002**
(21) Application number: 99830580.9
(22) Date of filing: 14.09.1999
(51) Int. Cl.: A01K 39/02, A01K 39/026

(54) **Drinking vessel for bird breeding**
Trinkgefäss für die Geflügelzucht
Récipient pour boire pour l'élevage de volailles

(30) Priority: 30.09.1998 IT TO980820
(43) Date of publication of application: 12.04.2000
(73) Proprietor: GIORDANO POULTRY-PLAST S.p.A., I-12023 Caraglio (Cuneo) (IT)
(72) Inventor: Giordano, Oscar, 12023 Caraglio (Cuneo) (IT)
(74) Representative: Buzzi, Franco

(56) References cited:
- FR-A- 2 726 155
- US-A- 1 787 544

## Description

The present invention relates in general to drinking vessels for bird breeding, i.e. for poultry farming and the like, and relates more particularly to a drinking vessel of the type comprising a supporting and stabilizing weight with means for hanging it and having a plurality of projecting cups connectable, via respective independent valves, to a water supply source.

A drinking vessel of this type is described and illustrated in, for example, French Patent application FR-A-2726155, in which the supporting and stabilizing weight is a solid body, and the cups are fixed to common pipe arranged around the edge of the weight, so that when in use they are connected to each other and to the water supply source in series.

This known construction has a number of drawbacks. In the first place, the solid configuration of the supporting and stabilizing weight makes the drinking vessel very heavy, causing problems for shipping from the place of manufacture to the place of sale or use of the drinking vessel.

In the second place the series connection of the cups can cause problems of insufficient supply to those cups situated towards the end of the common pipe in the event of heavy demand for water from the cups towards the initial end of this common pipe. Similar problems can arise in the case of leaks from the common pipe or from the connectors between the pipe and the cups.

In addition, this known drinking vessel is of relatively complicated and expensive construction.

The object of the present invention is to overcome the abovementioned drawbacks, and this object is achieved principally due to the fact that the said supporting and stabilizing weight of the drinking vessel is defined by a hollow body designed to be filled with a ballast material, normally water, and in that the said cups are connected in parallel, by respective independent tubes, to an inlet for the supply from the said water source.

The abovementioned inlet preferably includes an annular manifold arranged centrally at the top of the hollow body of the drinking vessel and a cap fitted leaktightly and removably to the said manifold and incorporating a supply connector.

In a preferred embodiment of the invention the hollow body is formed by two half shells defining a base and an upper part, respectively, both being of moulded plastic material and joined together permanently along respective opposing annular edges in such a way as to define the cavity of the body.

The half shell that forms the base is conveniently re-entrant towards the upper part, thus being concave to allow interlocking stacking of the drinking vessel with an identical drinking vessel.

Other features and advantages of the invention will become clear in the course of the detailed description given below with reference to the appended drawings which are supplied purely by way of non-restrictive example, in which:
Figure 1 is a schematic perspective view of a drinking vessel for bird breeding according to the invention,
Figure 2 is a side view of the drinking vessel on an enlarge scale,
Figure 3 is an exploded axial cross section of Figure 2,
Figure 4 is a partly cut-away top plan view of Figure 2, and
Figure 5 is a partial axial section through the drinking vessel shown stacked with an identical drinking vessel.

Referring to the drawings, the drinking vessel according to the invention comprises a body indicated by the general number 1 and being polygonal - pentagonal in the case of the example illustrated - in plan view, from the lower part of which there project a plurality of cups 2, of which there are five in the example illustrated.

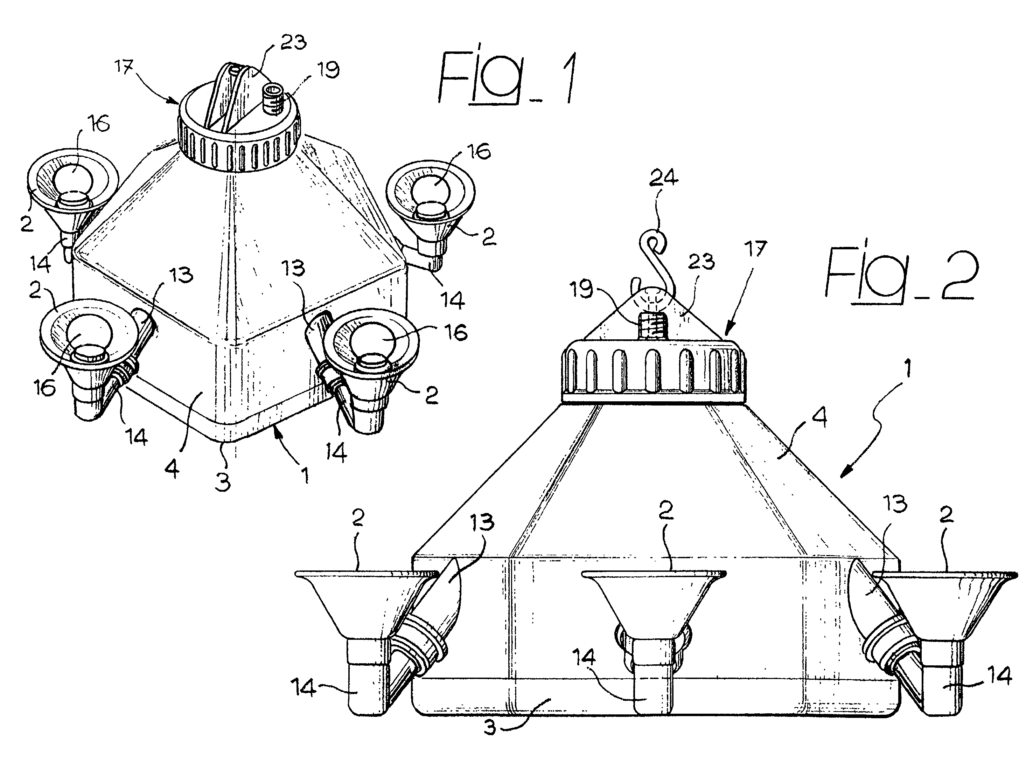

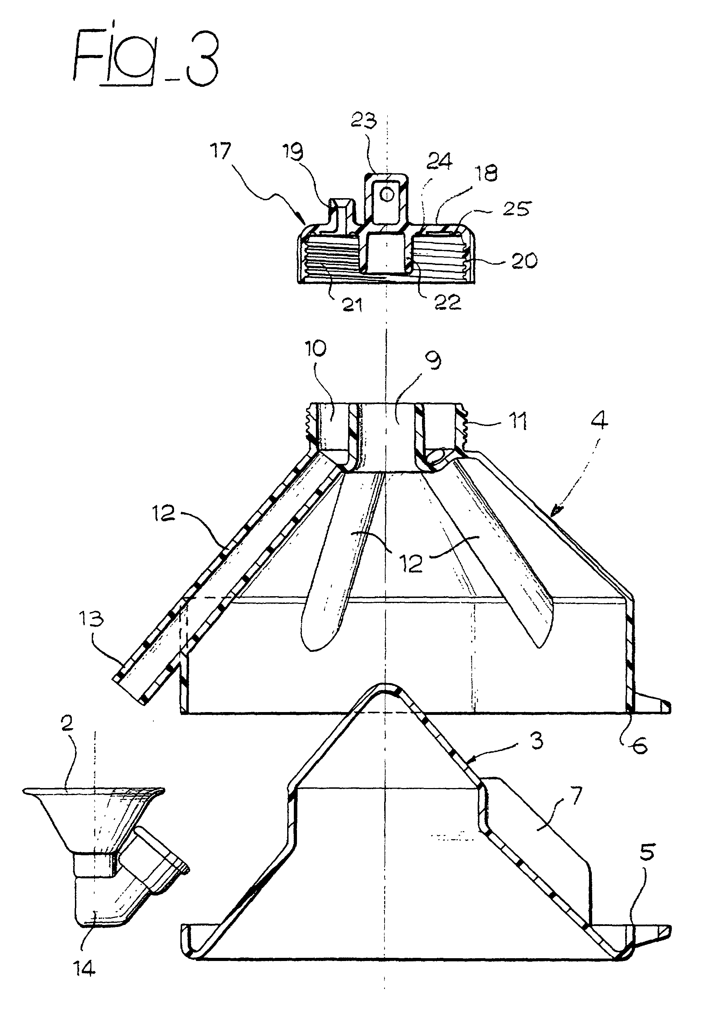

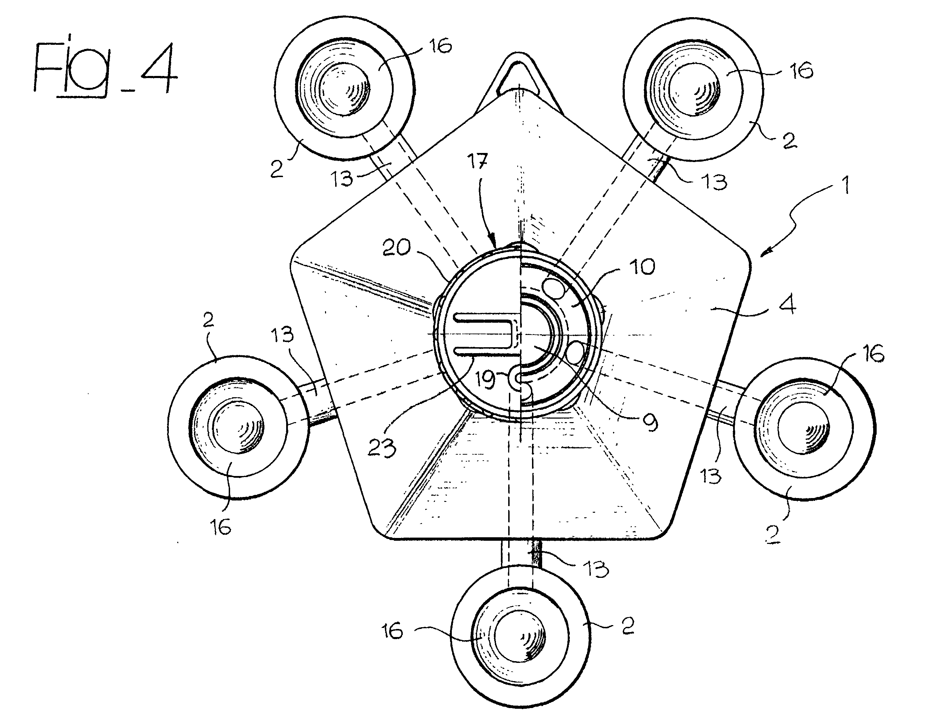

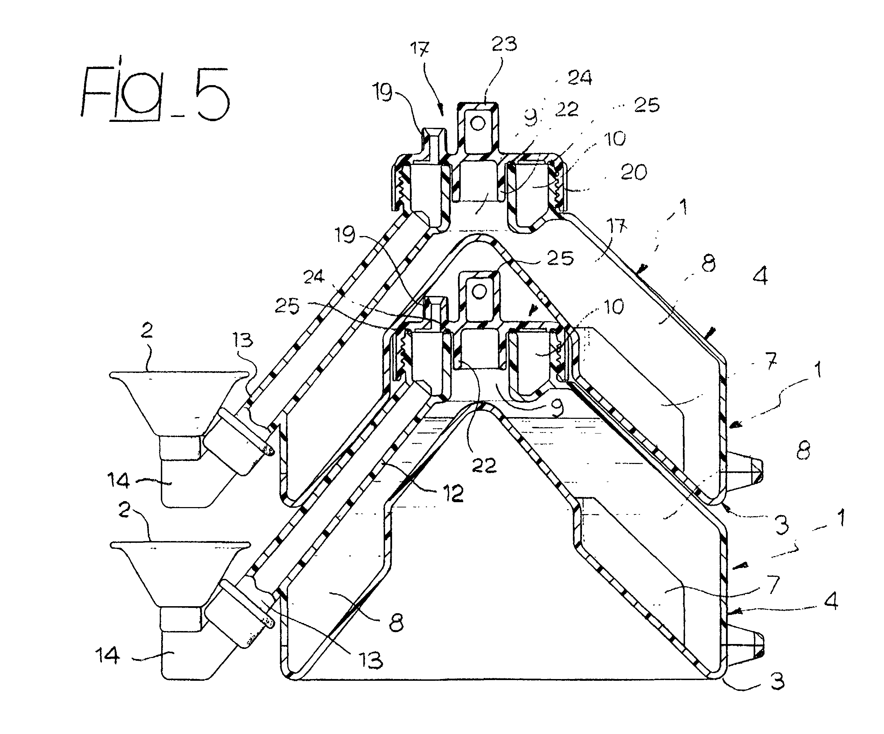

As shown in detail in Figures 3 and 5, the body 2 is hollow and is formed by a half shell forming a base 3 and an upper half shell 4, both of moulded plastic material and joined permanently together along respective opposing annular edges 5, 6. The upper half shell 4 has a raised overall shape and the base half shell 3 forms a re-entrant shape into the upper half shell 4, and is formed with a series of integral projecting ribs 7.

In the assembled condition of the body 1 shown in Figure 5, the half shells 3 and 4 define a cavity 8 accessible from the exterior through a central aperture 9 formed in the top of the upper half shell 4.

The upper half shell 4 is also formed integrally, concentrically with the aperture 9, with an annular manifold 10 in the form of an open-topped channel whose radially outer wall is threaded 11. A series of tubes 12, which are also moulded together with the upper half shell 4 radiate out from the annular channel manifold 10, extend downwards and comprise respective lower ends 13 projecting from the body 1. Attached to each end 13 by a bayonet coupling (not illustrated in detail) is a bent connector 14 carrying the corresponding cup 2. In practice, therefore, the cups 2 are connected in parallel, by their respective independent tubes 12, to the annular manifold 10.

Each cup 2 is provided, in a manner known per se and therefore not illustrated in detail, with its own shut-off valve with an associated float actuator 16.

17 denotes a cap having two functions, viz. to complete and seal off the annular channel manifold 10, and to seal off the central aperture 9. For this purpose the cap 17 comprises a wall 18 formed with a supply connector 19, and a side skirt 20 containing a female thread 21 designed to fit the male thread 11 on the manifold 10. Extending integrally from the wall 18 are an axial protrusion 22 designed to engage in the aperture 9, and on the outside an attachment member 23 for a hanging hook 24 (Figure 2).

The cap 17 is conveniently formed from a single piece of moulded plastic material. Also, on the inside of its wall 18 are two concentric annular seats containing two O-rings, namely an inner ring 24 and an outer ring 25.

Because of the particular form of the body 1, and especially because of the re-entrant form of the base half shell 3, the drinking vessel according to the invention can be advantageously fitted together with identical drinking vessels in a stacked arrangement, shown in Figure 5, for storage and shipping.

When in use, the cavity 8 defined between the half shells 3 and 4 is filled, following removal of the cap 17, with a ballast material, usually water. The cap 17 is then put back on, the thread 21 being screwed fully down onto the thread 11, so that the annular manifold 10 is sealed above by the annular seals 24 and 25, while at the same time the annular manifold 10 is isolated from the central aperture 9.

The body 1 now filled with water assumes the function of a supporting and stabilizing weight for the drinking vessel when the latter is hung up: for this purpose the hook 24 inserted into the attachment member 23 is connected to a hanging rod in such a way that the base 3 of the drinking vessel is maintained at a predetermined distance from the ground.

The supply connector 19 in the cap 17 is then connected to a water supply source, causing the cups 2 to be supplied in parallel from the annular manifold 10 through respective independent tubes 12 and their own shut-off valves.

Needless to say, the details of construction and the embodiments can be considerably modified compared with what has been described and illustrated, without thereby departing from the scope of the present invention as defined in the following claims.

## Claims

1. Drinking vessel for bird breeding, comprising a supporting and stabilizing weight with means for hanging it and having a plurality of projecting cups connectable, via respective independent valves, to a water supply source, **characterized in that** the said supporting and stabilizing weight is defined by a hollow body (1) designed to be filled with a ballast material, normally water, and **in that** the said cups (2) are connected in parallel, by respective independent tubes (12), to an inlet (10, 19) for the supply from the said water source.

2. Drinking vessel according to Claim 1, **characterized in that** the said inlet includes an annular manifold (10) arranged centrally at the top of the said hollow body (1) and a cap (17) fitted leaktightly and removably to the said manifold (10) and incorporating a supply connector (19).

3. Drinking vessel according to Claim 2, **characterized in that** the cavity (8) of the body (1) communicates with an aperture (9) at the top of the said body (1), and **in that** the said cap (17) also closes the said aperture (9).

4. Drinking vessel according to Claim 3, **characterized in that** the said annular manifold (9) is formed by an open-topped circular channel whose radially outer wall is threaded (11), **in that** the said aperture (9) of the body (1) is concentric with the said circular channel (10), and **in that** the said cap (17) closes the said annular channel (10) from the top, includes an outer annular wall (20) with a female thread (21) for engagement on the said male thread (11), and possesses an inner central axial protrusion (22) engaged in the said aperture (9) of the body (1).

5. Drinking vessel according to Claim 4, **characterized in that** the said cap (17) contains two concentric annular seals (24, 25) to seal the said circular channel (10) and prevent communication between the said circular channel (10) and the said aperture (9).

6. Drinking vessel according to Claim 4 or Claim 5, **characterized in that** the said cap (17) also contains an attachment member (23) from which to hang the body (1).

7. Drinking vessel according to any one of the preceding claims, **characterized in that** the said body (1) is formed by two half shells (3, 4) defining a base and an upper part, respectively, both being of moulded plastic material and joined together permanently along respective opposing annular edges (5, 6) in such a way as to define the cavity (8) of the body (1).

8. Drinking vessel according to Claim 7, **characterized in that** the said base (3) is re-entrant towards the upper part (4), thus being concave to allow interlocking stacking of the drinking vessel with an identical drinking vessel.

9. Drinking vessel according to Claim 8, **characterized in that** the said upper part (4) is formed in one piece with the said circular channel (10) and with the said tubes (12) of the cups (2).

10. Drinking vessel according to Claim 8, **characterized in that** the said base (3) is formed in one piece with partitions (7) projecting into the cavity (8) of the body (1).

11. Drinking vessel according to any one of the preceding claims, **characterized in that** the said cups (2) with their respective valves are connected to the said tubes (12) by respective bent connectors (14).

12. Drinking vessel according to any one of the preceding claims, **characterized in that** the shape of the said body (1) in plan view is polygonal, preferably pentagonal.

## Patentansprüche

1. Trinkgefäß für die Geflügelzucht, das ein Stütz- und Stabilisierungsgewicht mit Mitteln enthält, um es aufzuhängen, und das eine Vielzahl von überhängenden Näpfen aufweist, die durch jeweilige unabhängige Absperrorgane mit einer Wasserversorgungsquelle verbindbar sind, **gekennzeichnet dadurch, dass** das Stütz- und Stabilisierungsgewicht durch einen Hohlkörper (1) definiert ist, der konstruiert ist, um mit einem Ballastmaterial, normalerweise Wasser, gefüllt zu sein, und dadurch dass die Näpfe (2) parallel durch jeweilige unabhängige Röhren (12) mit einem Einlass (10, 19) für die Zuführung von der Wasserquelle verbunden sind.

2. Trinkgefäß gemäß Anspruch 1, **gekennzeichnet dadurch, dass** der Einlass einen ringförmigen Verteiler (10) umfasst, der zentral an dem oberen Ende des Hohlkörpers (1) und einer Verschlusskappe (17) angeordnet ist, die wasserdicht und herausnehmbar an den Verteiler (10) montiert ist und ein Versorgungsverbindungsstück (19) einschließt.

3. Trinkgefäß gemäß Anspruch 2, **gekennzeichnet dadurch, dass** der Hohlraum (8) des Körpers (1) mit einer Öffnung (9) mit dem oberen Ende des Körpers (1) verbunden ist, und dadurch dass die Verschlusskappe (17) auch die Öffnung (9) schließt.

4. Trinkgefäß gemäß Anspruch 3, **gekennzeichnet dadurch, dass** der ringförmige Verteiler (9) durch einen offenen, kreisförmigen Kanal gebildet ist, dessen radiale Aussenwand gewindet ist (11), dadurch dass die Öffnung (9) des Körpers (1) mit dem kreisförmigen Kanal (10) konzentrisch ist, und dadurch dass die Verschlusskappe (17) den Kanal (10) an dem oberen Ende schließt, eine ringförmige Außenwand (20) mit einer Hohlschraube (21) zum Eingreifen auf das Außengewinde (11) umfasst, und einen inneren, zentralen, axialen Vorsprung (22) besitzt, der in die Öffnung (9) des Körpers (1) eingreift.

5. Trinkgefäß gemäß Anspruch 4, **gekennzeichnet dadurch, dass** die Verschlusskappe (17) zwei konzentrische, ringförmige Verschlüsse (24, 25) enthält, um den kreisförmigen Kanal (10) zu verschließen und die Verbindung zwischen dem kreisförmigen Kanal (10) und der Öffnung (9) zu verhindern.

6. Trinkgefäß gemäß Anspruch 4 oder Anspruch 5, **gekennzeichnet dadurch, dass** die Verschlusskappe (17) auch ein Befestigungselement (23) zum Aufhängen des Körpers (1) enthält.

7. Trinkgefäß gemäß irgendeinem der vorstehenden Ansprüche, **gekennzeichnet dadurch, dass** der Körper (1) durch zwei Gehäusehälften (3, 4) gebildet ist, die ein Unter- bzw. ein Oberteil definieren, wobei beide aus geformtem Kunststoffinaterial und permanent entlang jeweiliger gegenüberliegender ringförmiger Ränder (5, 6) in solch einer Weise miteinander verbunden sind, dass der Hohlraum (8) des Körpers (1) definiert wird.

8. Trinkgefäß gemäß Anspruch 7, **gekennzeichnet dadurch, dass** das Unterteil (3) zu dem Oberteil (4) einspringend ist, und folglich konkav ist, um ein ineinandergreifendes Stapeln des Trinkgefäßes mit einem identischen Trinkgefäß zu erlauben.

9. Trinkgefäß gemäß Anspruch 8, **gekennzeichnet dadurch, dass** das Oberteil (4) mit dem kreisförmigen Kanal (10) und mit den Röhren (12) der Näpfe (2) in einem Stück gebildet ist.

10. Trinkgefäß gemäß Anspruch 8, **gekennzeichnet dadurch, dass** das Unterteil (3) mit Zwischenwänden (7) in einem Stück gebildet ist, die in den Hohlraum (8) des Körpers (1) vorspringen.

11. Trinkgefäß gemäß irgendeinem der vorstehenden Ansprüche, **gekennzeichnet dadurch, dass** die Näpfe (2) mit ihren jeweiligen Absperrorganen durch jeweilige gebogene Verbindungsstücke (14) mit den Röhren (12) verbunden sind.

12. Trinkgefäß gemäß irgendeinem der vorstehenden Ansprüche, **gekennzeichnet dadurch, dass** die Form des Körpers (1) bei Aufsicht polygonal, vorzugsweise fünfeckig, ist.

## Revendications

1. Récipient-abreuvoir pour l'élevage d'oiseaux, comprenant un poids de support et de stabilisation avec des moyens pour sa suspension, et comportant une pluralité de coupelles en projection, susceptibles d'être connectées, via des valves indépendantes respectives, à une source de fourniture d'eau, **caractérisé en ce que** ledit poids de support et de stabilisation est défini par un corps creux (1) conçu pour être rempli avec un matériau de ballast, normalement de l'eau, et **en ce que** lesdites coupelles (2) sont connectées en parallèle, par des tubes indépendants respectifs (12), à une entrée (10, 19) pour l'alimentation depuis ladite source d'eau.

2. Récipient-abreuvoir pour selon la revendication 1, **caractérisé en ce que** ladite entrée inclut un collecteur annulaire (10) agencé de façon centrale au sommet dudit corps creux (1), et un capuchon (17) monté de façon étanche et amovible sur ledit collecteur (10) et incorporant un connecteur d'alimentation (19).

3. Récipient-abreuvoir selon la revendication 2, **caractérisé en ce que** la cavité (8) du corps (1) communique avec une ouverture (9) au sommet dudit corps (1), et **en ce que** ledit capuchon (17) ferme également ladite ouverture (9).

4. Récipient-abreuvoir selon la revendication 3, **caractérisé en ce que** ledit collecteur annulaire (9) est formé par un canal circulaire à sommet ouvert dont la paroi radialement extérieure comporte un pas de vis (11), **en ce que** ladite ouverture (9) du corps (1) est concentrique avec ledit canal circulaire (10), et ce que ledit capuchon (17) ferme ledit canal annulaire (10) depuis le sommet, et inclut une paroi annulaire extérieure (20) avec un pas de vis femelle (21) pour engagement sur ledit pas de vis mâle (11) et possède une projection axiale centrale intérieure (22) engagée dans ladite ouverture (9) du corps (1).

5. Récipient-abreuvoir selon la revendication 4, **caractérisé en ce que** ledit capuchon (17) contient deux joints annulaires concentriques (24, 25) pour étancher ledit canal circulaire (10) et empêcher une communication entre ledit canal circulaire (10) et ladite ouverture (9).

6. Récipient-abreuvoir selon l'une ou l'autre des revendications 4 et 5, **caractérisé en ce que** ledit capuchon (17) contient également un élément d'attache (23) afin d'y suspendre le corps (1).

7. Récipient-abreuvoir selon l'une quelconque des revendications précédentes, **caractérisé en ce que** ledit corps (1) est formé par deux demi-coques (3, 4) définissant respectivement une base et une partie supérieure, les deux étant en matière plastique moulée et jointes l'une à l'autre de façon permanente le long de bordures annulaires opposées respectives (5, 6) de manière à définir la cavité (8) du corps (1).

8. Récipient-abreuvoir selon la revendication 7, **caractérisé en ce que** ladite base (3) a une forme rentrante en direction de la partie supérieure (4), étant ainsi concave pour permettre un empilement avec interverrouillage du récipient-abreuvoir avec un récipient-abreuvoir identique.

9. Récipient-abreuvoir selon la revendication 8, **caractérisé en ce que** ladite partie supérieure (4) est formée d'une seule pièce avec ledit canal circulaire (10) et avec lesdits tubes (12) des coupelles (2).

10. Récipient-abreuvoir selon la revendication 8, **caractérisé en ce que** ladite base (3) est formée d'une seule pièce avec des cloisons (7) qui se projettent jusque dans la cavité (8) du corps (1).

11. Récipient-abreuvoir selon l'une quelconque des revendications précédentes, **caractérisé en ce que** lesdites coupelles (2) avec leurs valves respectives sont connectées audit tube (12) par des connecteurs coudés respectifs (14).

12. Récipient-abreuvoir selon l'une quelconque des revendications précédentes, **caractérisé en ce que** la forme dudit corps (1) en vue en plan est polygonale, de préférence pentagonale.
